# EUROPÄISCHE PATENTSCHRIFT

(11) **EP 0 503 305 B1**
(45) Veröffentlichungstag und Bekanntmachung des Hinweises auf die Patenterteilung: **19.10.1994**
(21) Anmeldenummer: 92102473.3
(22) Anmeldetag: 14.02.1992
(51) Int. Cl.: B60R 9/045

(54) **Dachgepäckträger für Kraftfahrzeuge mit Dachreling**
Roof rack for vehicles with roof rails
Galerie de toit pour véhicules avec rails de toit

(30) Priorität: 13.03.1991 DE 4108058
(43) Veröffentlichungstag der Anmeldung: 16.09.1992
(73) Patentinhaber: VOTEX GmbH, D-63303 Dreieich (DE)
(72) Erfinder: Dümmler, Stephan, Dipl.-Ing., W-6074 Rödermark (DE)
(74) Vertreter: Neubauer, Hans-Jürgen, Dipl.-Phys.

(56) Entgegenhaltungen:
- BE-A- 905 045
- DE-U- 8 811 874
- PATENT ABSTRACTS OF JAPAN vol. 14, no. 196 (M-964)(4139) 20. April 1990; & JP-A-2038158

## Beschreibung

Die Erfindung betrifft einen Dachgepäckträger für Kraftfahrzeuge mit Dachreling nach dem Oberbegriff des Anspruchs 1.

Es ist bekannt, an Kraftfahrzeugen, insbesondere an Kombifahrzeugen und Geländefahrzeugen, eine Dachreling anzubringen, die aus zwei zu beiden Fahrzeugseiten am Fahrzeugdach längs verlaufenden Relingrohren besteht. Diese Relingrohre werden bei der Fahrzeugherstellung fest mit dem Dach verbunden und verbleiben somit ständig am Fahrzeug.

Die Dachreling bzw. die Relingrohre dienen als Halterung für lösbare Dachaufbauten, insbesondere für die Befestigung von Querträgern eines Dachgepäckträgers. Ein solcher Querträger erstreckt sich in an sich bekannter Weise von einem Relingrohr zum anderen und wird mit je einer endseitigen, lösbaren Spanneinrichtung an den Relingrohren befestigt und gehalten.

Bei einem bekannten, offenkundig vorbenutzten Dachgepäcktrager besteht der Querträger aus einem Hohlprofil mit je einem an seiner Unterseite und in jedem Endbereich des Querträgers angeordneten Längsschlitz.

Als Haltemittel und Spanneinrichtung sind in jeden Längsschlitz jeweils ein Abstützbacken und ein Spannbacken hintereinander in Querträgerlängsrichtung eingesetzt. Dabei liegt jeweils ein oberes Backenteil im Hohlprofil und ein unteres Backenteil steht nach unten zum Relingrohr hin vor. Die Abstützbacken und Spannbacken weisen jeweils seitliche Längsnuten zur Aufnahme der Längsränder des jeweiligen Längsschlitzes auf und sind dadurch längsverschieblich gehalten.

Die beiden am Querträger angebrachten Abstützbacken liegen zur Fahrzeugmitte hin und sind im Abstand der Relingrohre fixiert. Zur Anpassung an unterschiedliche Relingrohrabstände sind die Abstützbacken am Querträger zu Einstellzwecken verschiebbar und mit einer Befestigungsvorrichtung fixierbar. Im oberen Backenteil der Abstützbacken ist eine von der Querträgerstirnseite her im Hohlprofil zugängliche und in Querträgerlängsrichtung verlaufende Gewindebohrung vorgesehen.

Die beweglichen Spannbacken liegen zur Fahrzeugaußenseite hin und sind entlang des jeweiligen Längsschlitzes verschiebbar angeordnet. Über einen Spannschraubenbolzen durch eine in Querträgerlängsrichtung mit der Gewindebohrung im zugeordneten Abstützbacken axial verlaufende Bohrung erfolgt eine Spannverbindung mit diesem Abstützbacken.

Das untere Backenteil des jeweiligen Spannbackens ist als Bügelteil ausgebildet, welches das zugeordnete Relingrohr zumindest teilweise für eine Halterung des Querträgers beim Befestigen der Spanneinrichtung bzw. beim Anziehen des Spannschraubenbolzens umfaßt.

Zum Anbringen dieses Dachgepäckträgers werden die Spannschraubenbolzen zu beiden Seiten gelöst, wodurch sich jede Spanneinrichtung durch Verschieben des Spannbackens zur Querträgerendseite hin öffnet. Anschließend wird der Querträger mit den im Abstand der Relingrohre liegenden Abstützbacken zwischen die Relingrohre eingesetzt und die Spannschraubenbolzen angezogen, wodurch die Spanneinrichtungen geschlossen und der Querträger fest mit den Relingrohren verbunden ist.

Die Anbringung und Abnahme eines so ausgeführten Dachgepäckträgers ist mit nur wenigen Handgriffen einfach durchführbar, wobei auf einfache Weise die verschiebbare Halterung der Spannbacken ohne weitere Bauteile im zugeordneten Längsschlitz in den Längsnuten durchgeführt ist.

Da die Spannschraubenbolzen in Längsrichtung des Querträgers innerhalb des Hohlprofils verlaufen, sind sie gegen Umwelteinflüsse und Korrosion weitgehend geschützt. Zudem kann durch eine einfache Abdeckung der Stirnseite des Querträgers die Einführung eines Werkzeugs an den Spannschraubenbolzen unterbunden werden, so daß eine einfache Abnahme- und Diebstahlsicherung für den Dachgepäckträger herstellbar ist.

Bei höherer Dachlast wird jedoch auf die Dachgepäckquerträger beim Bremsen und Beschleunigen des Fahrzeugs eine hohe Belastung in Fahrzeuglängsrichtung aufgebracht. Bei der bekannten Anbringung der Abstützbacken und Spannbacken in einem jeweils endseitigen Längsschlitz im Hohlprofil des Querträgers wird auf diesen eine Kippbewegung ausgeübt, die eine Verwindung und dabei Aufweitung des Längsschlitzes, verbunden mit einer Lockerung der Verbindung zwischen dem Querträger und den Abstützbacken und Spannbacken, hervorrufen kann.

Aufgabe der Erfindung ist es demgegenüber, einen gattungsgemäßen Dachgepäckträger so weiterzubilden, daß die Verbindung zwischen Abstützbacken und Spannbacken mit dem Querträger stabiler ausgeführt ist.

Diese Aufgabe wird mit den kennzeichnenden Merkmalen des Anspruchs 1 gelöst.

Gemäß Anspruch 1 weisen die Längsränder des jeweiligen Längsschlitzes Führungsrippen auf, die zur Hohlprofilinnenseite bzw. nach oben abstehen. Dadurch wird der Bereich um die Längsränder allgemein verstärkt. Zudem sind die Längsnuten in den Abstützbacken und Spannbacken mit einem entsprechenden negativen Profil ausgeführt, das die Führungsrippen aufnimmt und übergreift. Damit kann sich der Längsschlitz nicht mehr aufweiten, da durch die übergreifende Führung der Abstützbacken und Spannbacken an den Führungsrippen diese zusammengehalten werden. Damit kann vorteilhaft bei relativ dünner Wandstärke des Hohlprofils und der Führungsrippen eine sichere und stabile Aufnahme der Abstützbacken und Spannbacken am Querträger realisiert werden.

Zum Ausgleich und zur Anpassung eines Dachgepäckträgers an unterschiedliche Abstände der Relingrohre, wie sie beispielsweise im Vergleich zur Vorder- und Rückseite eines Fahrzeugs auftreten, ist nach Anspruch 2 in an sich bekannter Weise nach dem gattungsgemäßen Stand der Technik vorgesehen, daß wenigstens ein Abstützbacken am Querträger zu Einstellzwecken verschiebbar und mit einer Befestigungsvorrichtung fixierbar ist.

Die bekannte Befestigungsvorrichtung besteht aus einem separaten Klemmstück im Hohlprofil und einer von unten her durch den Abstützbacken einschraubbaren Klemmschraube, wobei zur Halterung jeweils die Längsränder zwischen das Klemmstück und den Abstützbacken eingeklemmt werden. Somit treten auch hier die Nachteile auf, daß bei hoher Dachlast Verwindungskräfte auf die Verbindung wirken und die Klemmverbindung lockern können. Zudem wird bei einer versehentlichen, zu starken Lockerung der Klemmverbindung das Klemmstück frei und liegt dann lose im Hohlprofil.

Es wird daher weiter vorgeschlagen, die Befestigungsvorrichtung mit einer von unten her im Schlitzbereich angeordneten und in den Abstützbacken einschraubbaren Klemmschraube und aus einem, die Schlitzränder von außen her überdeckenden Klemmstück auszuführen. Bei dieser Ausführung können auch im Bereich der Klemmbefestigung die Längsnuten am Abstützbacken die Führungsrippen am Längsschlitz für einen stabilen Halt übergreifen. Zudem ist das Klemmstück von außen her jederzeit zugänglich.

Mit den Merkmalen des Anspruchs 3 wird über einen Fortsatz am Abstützbacken eine Abdeckung des Längsschlitzes gegen Umwelteinflüsse im Bereich des Anpassungs- und Verstellweges erreicht.

Zweckmäßig wird zudem ein an sich bekannter, absperrbarer Stirndeckel an den Stirnseiten der Querträger vorgesehen, so daß die im Hohlprofil liegenden Spannschraubenbolzen nicht mehr zugänglich sind und der Gepäckträger nicht unbefugt abgenommen werden kann. Ein solcher Stirndeckel soll so groß ausgeführt sein, daß er stirnseitig auch einen an sich bekannten, nach oben offenen Längskanal des Querträgers abdeckt, so daß auch in den Längskanal eingeschobene Anbauteile gegen eine Herausnahme gesichert sind.

Anhand einer Zeichnung wird eine Ausführungsform der Erfindung mit weiteren Merkmalen, Einzelheiten und Vorteilen näher erläutert.

Es zeigen
- Fig. 1: einen Längsschnitt durch einen Querträger eines Dachgepäckträgers im Bereich einer lösbaren Spanneinrichtung, entsprechend der Linie A-A aus Fig. 2,
- Fig. 2: einen Querschnitt entsprechend der Linie C-C aus Fig. 1 und
- Fig. 3: eine vergrößerte Darstellung einer Befestigungsvorrichtung (Bereich B) an einem Abstützbacken.

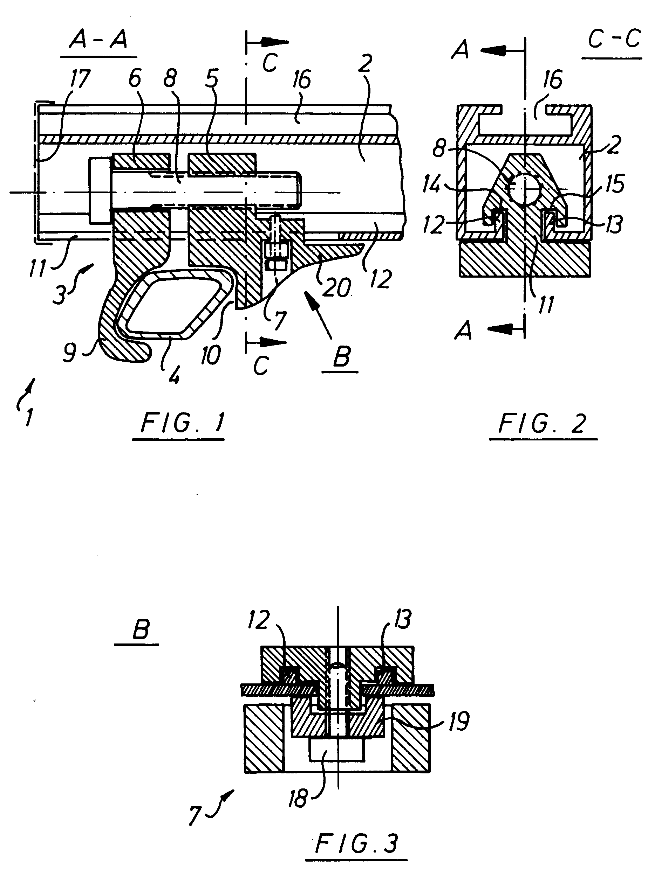

In Fig. 1 ist ein seitlicher Bereich eines Dachgepäckträgers 1 für ein Kraftfahrzeug mit Dachreling dargestellt. Der Dachgepäckträger besteht im wesentlichen aus einem Querträger 2 als Hohlprofil und einer Halte- und Spanneinrichtung 3 zur Befestigung an einem Relingrohr 4 der Dachreling.

Die Spanneinrichtung 3 umfaßt einen zur Fahrzeugmitte hin liegenden Abstützbacken 5 und einen verschiebbar gehaltenen, zur Fahrzeugaußenseite hin liegenden Spannbacken 6.

Der Abstützbacken 5 ist mit Hilfe einer Befestigungsvorrichtung 7 (vergrößert dargestellt in Fig. 3 mit einer gegenüber Fig. 2 etwas modifizierten Anordnung von Führungsrippen 12, 13 und Längsnuten 14, 15) am Querträger 2 fixiert. Relativ dazu ist der Spannbacken 6 mit einem Spannschraubenbolzen 8 verschiebbar verbunden. Dieser Spannschraubenbolzen verläuft in oberen Backenteilen innerhalb und in Längsrichtung des Hohlprofils des Querträgers 2. Der untere Teil des Spannbackens 6 ist als Bügel 9 ausgebildet, der das Relingrohr 4 umgreift. Am Abstützbacken 5 ist dagegen lediglich eine senkrechte Anlagefläche 10 vorgesehen, so daß der Querträger von oben her bei geöffneter Spanneinrichtung 3 mit den Abstützbacken 5 zwischen die Relingrohre 4 eingesetzt werden kann.

Die Montage und Halterung der Abstützbacken 5 und Spannbacken 6 erfolgt in einem Längsschlitz 11 an der Unterseite und im seitlichen Endbereich des Querträgers 2 (sh. auch Querschnitt nach Fig. 2). An den Längsrändern des Längsschlitzes 11 sind Führungsrippen 12, 13 angeformt, die zur Hohlprofilinnenseite bzw. nach oben abstehen. Die Abstützbacken 5 und Spannbacken 6 enthalten entsprechende Längsnuten 14, 15 mit einer negativen Profilform, worin die Führungsrippen 12, 13 aufgenommen und seitlich übergriffen werden.

Der Querträger 2 enthält einen zur Oberseite hin offenen Längskanal 16 mit Hinterschneidungen zur an sich bekannten Aufnahme von Anbauteilen, wie Fahrradhalterung, Bootshalterungen, etc., die seitlich in den Längskanal 16 eingeschoben werden können. Die Stirnseiten des Querträgers 2 sind mit einem (an sich bekannten und schematisch dargestellten) Stirndeckel 17 abgedeckt, der mit Hilfe eines Schlosses von der Außenseite her absperrbar ist. Damit ist einerseits das Hohlprofil des Querträgers 2 gegen ein Eindringen von Feuchtigkeit und Schmutz geschützt und andererseits ist die seitliche Einschiebeöffnung für den Längskanal 16 und der Spannschraubenbolzen 8 abgedeckt. Damit kann nach einem Absperren des Stirndeckels 17 weder ein Anbauteil aus dem Längskanal 16 entnommen werden noch der Dachgepäckträger insgesamt durch Lösen des Spannschraubenbolzens 8 unbefugt abgenommen werden.

Wenigstens einer der am Querträger 2 gegenüberliegenden Abstützbacken 5 ist im Längsschnitt 11 verschiebbar für eine Anpassung an den Abstand der Relingrohre 4 gehalten und mit Hilfe der Befestigungsvorrichtung 7 fixierbar. Die Befestigungsvorrichtung besteht aus einer Klemmschraube 18, die von unten her in den Abstützbacken 5 einschraubbar ist und aus einem Klemmstück 19, das die Schlitzränder des Längsschlitzes 11 überdeckt.

Anschließend an den Bereich der Befestigungsvorrichtung 7 ist ein zur Fahrzeugmitte hin weisender Fortsatz 20 angeformt, der nicht in den Längsschlitz 11 eingreift und diesen von der Außenseite her im Verschiebe- und Anpassungsbereich abdeckt.

Die dargestellte Anordnung hat folgende Funktion:
Für die Montage des Dachgepäckträgers werden die Abstützbacken 5 und Spannbacken 6 von beiden Seiten her in die jeweiligen Längsschlitze 11 eingeschoben. Anschließend werden die Abstützbacken 5 mit Hilfe der Befestigungsvorrichtung 7 fixiert und an den Abstand der Relingrohre 4 so angepaßt, daß die Anlageflächen 10 von der Fahrzeugmitte her gesehen an den Relingrohren 4 anliegen. Durch Lösen der Spannschraubenbolzen 8 werden die Spanneinrichtungen 3 aufgemacht und der Querträger mit den Spanneinrichtungen über die Relingrohre 4 gesteckt. Anschließend werden die Spannschraubenbolzen 8 mit einem Werkzeug eingeschraubt, wodurch der jeweilige Spannbacken 6 mit seinem unteren Bügel 9 das jeweils zugeordnete Relingrohr 4 übergreift und in einem Form- und Klemmschluß hält.

Anschließend können Halterungen und Anbauteile in den Längsschlitz 16 eingeführt und die Stirndeckel 17 aufgesteckt und zur Diebstahlsicherung abgeschlossen werden.

Bei einer Kippbelastung auf den Querträger 2, z.B. bei Brems- oder Beschleunigungsvorgängen, wird einer Aufweitung des Längsschlitzes 11 mit den die Führungsrippen 12, 13 übergreifenden Längsnuten 14, 15 entgegengewirkt, wodurch der Längsschlitz 11 mit seinen Schlitzrändern zusammengehalten wird.

Zusammenfassend ist festzustellen, daß mit dem Anmeldungsgegenstand ein einfach aufgebauter und einfach handhabbarer Dachgepäckträger für Kraftfahrzeuge mit Dachreling zur Verfügung gestellt wird.

## Patentansprüche

1. Dachgepäckträger für Kraftfahrzeuge mit Dachreling,
wobei die Dachreling aus zwei zu beiden Fahrzeugseiten am Fahrzeugdach längs verlaufenden Relingrohren (4) besteht,
mit einem Querträger (2) als Gepäckträger-Querstange, der sich von einem Relingrohr (4) zum anderen erstreckt und der Querträger (2) ein Hohlprofil mit je einem an seiner Unterseite und in jedem Endbereich des Querträgers (2) angeordneten Längsschlitz (11) ist,
mit je einer lösbaren Spanneinrichtung (3), in jedem Endbereich des Querträgers (2) zur Befestigung des Querträgers (2) an den Relingrohren (4),
als Haltemittel und Spanneinrichtung (3) in jeden Längsschlitz (11) jeweils ein Abstützbacken (5) und ein Spannbacken (6) eingesetzt sind, wobei jeweils ein oberes Backenteil im Hohlprofil liegt und ein unteres Backenteil nach unten vorsteht, und die Abstützbacken (5) und Spannbacken (6) jeweils seitliche Längsnuten (14, 15) zur Aufnahme der Längsränder des jeweiligen Längsschlitzes (11) aufweisen,
die Abstützbacken (5) zur Fahrzeugmitte hin liegen, am Querträger (2) im Abstand der Relingrohre (4) fixiert sind und im oberen Backenteil eine von der Querträgerstirnseite her zugängliche, in Querträgerlängsrichtung verlaufende Gewindebohrung aufweisen,
die Spannbacken (6) zur Fahrzeugaußenseite hin liegen, entlang des jeweiligen Längsschlitzes (11) verschiebbar angeordnet sind und über einen Spann-Schraubenbolzen (8) durch eine in Querträgerlängsrichtung verlaufende Bohrung jeweils mit dem zugeordneten Abstützbacken (5) bzw. der entsprechenden Gewindebohrung verbunden sind und
das untere Backenteil des Spannbackens (6) als Bügelteil (9) ausgebildet ist, welches das zugeordnete Relingrohr (4) zumindest teilweise für eine Halterung des Querträgers (2) beim Befestigen der Spanneinrichtung (3) bzw. beim Anziehen des Spann-Schraubenbolzens (8) umfaßt,
dadurch gekennzeichnet,
daß die Längsränder des Längsschlitzes (11) Führungsrippen (12, 13) aufweisen, die zur Hohlprofilinnenseite bzw. nach oben abstehen und daß die Längsnuten (14, 15) mit einem entsprechenden, negativen Profil die Führungsrippen (12, 13) aufnehmen und übergreifen.

2. Dachgepäckträger nach Anspruch 1, dadurch gekennzeichnet, daß wenigstens ein Abstützbacken (5) an einem Querträger (2) entlang des Längsschlitzes (11) verschiebbar und lösbar mit einer Befestigungsvorrichtung (7) fixiert ist, so daß der Abstand der Abstützbacken (5) an den Abstand der Relingrohre (4) anpaßbar ist und daß die Befestigungsvorrichtung (7) aus einer von unten her im Schlitzbereich (11) angeordneten und in den Abstützbacken (5) einschraubbaren Klemmschraube (18) und aus einem die Schlitzränder von außen her überdeckenden Klemmstück (19) besteht.

3. Dachgepäckträger nach Anspruch 1 oder 2, dadurch gekennzeichnet, daß die Abstützbacken (5) jeweils einen zur Fahrzeugmitte hin gerichteten Fortsatz (20) aufweisen, der nicht in den zugeordneten Längsschlitz (11) eingreift und diesen von außen her abdeckt.

## Claims

1. A roof rack for motor vehicles, with roof rails,
wherein the roof rails consist of two railing tubes (4) extending on the vehicle roof longitudinally to the two sides of the vehicle,
with a cross bar (2) as the cross rod of the luggage rack, which extends from one railing tube (4) to the other, and the cross bar (2) is a hollow section with one longitudinal slot (11) each, arranged at its bottom side and in each end zone of the cross bar (2),
with one releasable clamping device (3) each, in each end zone of the cross bar (2), for securing the cross bar (2) on the railing tubes (4);
there are inserted into each longitudinal slot (11) respectively one bearing jaw (5) and one clamping jaw (6) as a holding means and clamping device (3), in which arrangement there respectively lies an upper jaw part in the hollow section and a lower jaw part projects downwards, and the bearing jaws (5) and clamping jaws (6) respectively have lateral longitudinal grooves (14, 15) for receiving the longitudinal edges of the respective longitudinal slot (11);
the bearing jaws (5) lie towards the centre of the vehicle, are secured on the cross bar (2) at the interspacing of the railing tubes (4) and have in the upper jaw portion a tapped bore that is accessible from the end face of the cross bar and extends in the longitudinal direction of the cross bar;
the clamping jaws (6) lie towards the outside of the vehicle, are arranged for displacement along the respective longitudinal slot (11), and are in each case connected by means of a clamping screw-bolt (8) through a bore extending in the longitudinal direction of the cross bar to the associated bearing jaw (5) or the corresponding tapped bore, and
the bottom jaw portion of the clamping jaw (6) is designed as a clamp part (9) which surrounds the associated railing tube (4) at least in part, for holding the cross bar (2) during the fastening of the clamping device (3) or during the tightening of the clamping screw-bolt (8),
characterized in that
the longitudinal edges of the longitudinal slot (11) have guide ribs (12, 13) which project towards the inner side of the hollow section or upwards, and that the longitudinal grooves (14, 15) receive the guide ribs (12, 13) with a corresponding negative profile and engage over them.

2. A roof rack according to claim 1, characterized in that at least one bearing jaw (5) is secured by a mounting device (7), on one cross bar (2), with the facility of displacement along the longitudinal slot (11) and of being released so that the interspacing of the bearing jaws (5) can be adjusted to the interspacing of the railing tubes (4) and
that the mounting device (7) consists of a clamping screw (18) arranged from below in the slot zone (11) and capable of being screwed into the bearing jaw (5), and of a clamping component (19) covering the slot edges from the outside.

3. A roof rack according to claim 1 or 2, characterized in that the bearing jaws (5) each have an extension (20) directed towards the centre of the vehicle which does not engage in the associated longitudinal slot (11) and covers the latter from the outside.

## Revendications

1. Porte-bagages de toit pour véhicules automobiles équipés d'une galerie de toit,
la galerie de toit se composant de deux tubes de galerie (4) qui s'étendent longitudinalement sur le toit du véhicule des deux côtés de celui-ci,
avec une barre transversale (2) servant de traverse porte-bagages, qui s'étend d'un tube (4) de la galerie à l'autre, cette traverse (2) étant un profilé creux qui présente une fente longitudinale (11) située sur sa face inférieure et dans chaque région d'extrémité de la traverse (2),
avec un dispositif de serrage desserrable (3) dans chaque région d'extrémité de la traverse (2) pour la fixation de la traverse (2) aux tubes (4) de la galerie,
une mâchoire d'appui (5) et une mâchoire de serrage (6) étant placées dans chaque fente longitudinale (11) en tant que moyen de retenue et dispositif de serrage (3), une partie supérieure de chaque mâchoire étant située dans le profilé creux et une partie inférieure de chaque mâchoire faisant saillie vers le bas, et les mâchoires d'appui (5) et de serrage (6) présentant chacune des rainures longitudinales (14, 15) sur les côtés pour recevoir les bords longitudinaux de la fente longitudinale (11) correspondante,
les mâchoires d'appui (5) étant situées du côté du milieu du véhicule, étant fixées à la traverse (2) à distance du tube (4) de la galerie et présentant, dans leur partie supérieure, un trou taraudé qui s'étend dans la direction longitudinale de la traverse et qui est accessible par le côté frontal de la traverse,
les mâchoires de serrage (6) étant situées du côté extérieur du véhicule, étant montées déplaçables le long de la fente longitudinale (11) correspondante et étant raccordées chacune à la mâchoire d'appui (5) associée, c'est-à-dire au trou taraudé correspondant, par un boulon fileté de serrage (8) passant à travers une forure s'étendant dans la direction longitudinale de la traverse, et
la partie inférieure de la mâchoire de serrage (6) étant réalisée sous forme de pièce recourbée en arc, qui enserre au moins en partie le tube associé (4) de la galerie pour maintenir la traverse (2) lors de la fixation du dispositif de serrage (3), c'est-à-dire lors du vissage du boulon fileté de serrage (8),
caractérisé en ce que
les bords longitudinaux de la fente longitudinale (11) présentent des nervures de guidage (12, 13) qui font saillie vers le côté intérieur du profilé creux, c'est-à-dire vers le haut, et en ce que les rainures longitudinales (14, 15) reçoivent et chevauchent ces nervures de guidage (12, 13) par un profil inverse correspondant.

2. Porte-bagages de toit selon la revendication 1, caractérisé en ce qu'au moins une mâchoire d'appui (5) est déplaçable sur une traverse (2) le long de la fente longitudinale (11) et est fixée de façon détachable par un dispositif de fixation (7), de sorte que l'écart des mâchoires d'appui (5) puisse être adapté à l'écart des tubes (4) de la galerie, et
en ce que le dispositif de fixation (7) se compose d'une vis de blocage (18) qui est disposée par le bas dans la fente (11) et peut être vissée dans la mâchoire d'appui, et d'une pièce de blocage (19) qui passe en pont, à l'extérieur, sur les bords de la fente.

3. Porte-bagages de toit selon la revendication 1 ou 2, caractérisé en ce que les mâchoires d'appui (5) comportent chacune un prolongement (20) qui est dirigé vers le milieu du véhicule et qui ne pénètre pas dans la fente longitudinale (11) associée, mais recouvre celle-ci de l'extérieur.
